Europäisches Patentamt

European Patent Office

Office européen des brevets

(19)

(11) Veröffentlichungsnummer: **0 085 668**
**B1**

(12) # EUROPÄISCHE PATENTSCHRIFT

(45) Veröffentlichungstag der Patentschrift:
30.04.86

(21) Anmeldenummer: 83890010.8

(22) Anmeldetag: 24.01.83

(51) Int. Cl.⁴: **H 02 G 7/05**

(54) **Abspannvorrichtung für Seile, Leitungen und dgl.**

(30) Priorität: 28.01.82 AT 306/82

(43) Veröffentlichungstag der Anmeldung:
10.08.83 Patentblatt 83/32

(45) Bekanntmachung des Hinweises auf die Patenterteilung:
30.04.86 Patentblatt 86/18

(84) Benannte Vertragsstaaten:
CH DE IT LI NL

(56) Entgegenhaltungen:
CH - A - 216 791
DE - A - 2 602 799

(73) Patentinhaber: ELIN-UNION Aktiengesellschaft für elektrische Industrie, Penzinger Strasse 76, A-1141 Wien (AT)

(72) Erfinder: Pach, Karl, Leopoldauerstrasse 5/4, A-1210 Wien (AT)

(74) Vertreter: Krause, Peter, Penzinger Strasse 76, A-1141 Wien (AT)

## Beschreibung

Die Erfindung betrifft eine Abspannvorrichtung für Seile, Leitungen od. dgl., insbesondere für selbsttragende Freileitungen, bei welcher zwei diametral gegenüberliegende, das Seil umschließende Klemmteile vorgesehen sind.

Eine derartige Abspannvorrichtung ist aus der CH-A-216 791 bekannt. Bei dieser Abspannvorrichtung steht jedoch der Gedanke im Vordergrund, daß dieses Gebilde mit einer Hand gehalten und gehandhabt werden kann. Daraus ist aber abzuleiten, daß diese Vorrichtung für relativ geringe Abspannkräfte geeignet ist. Auch sind für die Funktion dieser Vorrichtung viele Gelenkbolzen und bewegte Teile notwendig. Durch die notwendige präzise Bearbeitung der Teile entstehen hohe Herstellkosten.

Ferner sind Vorrichtungen in verschiedensten Variationen bereits bekannt. So wurde eine Ausführung verwendet, die aus zwei Halbschalen aus Aluminium besteht, die das abzuspannende Seil umschließen, wobei der so gebildete Hohlraum mit Gießharz ausgegossen wurde. Dieses Verfahren weist aber beträchtliche Nachteile auf. So ist es beispielsweise äußerst schwierig auf Baustellen die Abbindetemperatur für das Gießharz gleichmäßig über den doch längeren Zeitraum zu halten. Ferner ist es auch öfters vorgekommen, daß derartige Abspannklemmen den auftretenden großen Kräften nicht gewachsen waren. Die Folge davon ist somit eine erhöhte Unfallgefahr. Ferner ist aus der AT-B-203 570, der AT-B-355-117, der AT-B-344 271 bzw. aus der AT-B-353 880 eine Abspannklemme bekannt, die aus einem Gehäuse das aus zwei miteinander verbindbaren je mit einer von zwei gegenüberliegenden, in Spannrichtung konvergierenden Klemmflächen ausgestatteten, je mit einem Anlenkbolzen für eine Abspannlasche verbundenen Gehäuseteilen besteht. Ferner sind zwei Keile vorgesehen, die mit den Klemmflächen zusammenwirkende Keilflächen aufweisen, wobei mindestens einer der Keile an der abzuspannenden Leitung befestigbar ist.

Diese bekannten Klemmen bestehen aus einer Anzahl unabhängiger und erst beim Anbringen an einen Leiter miteinander verbindbarer Teile, was namentlich bei ungünstiger Witterung die Arbeit erschwert. Um die Anzahl der unabhängigen Teile zu verringern ist vorgeschlagen worden, die Gehäuseteile über eine Scharnierverbindung aneinanderzuschließen. Die Verbindung zu dem Gehäuse geschieht jedochebenfalls über die Keile. In den Rücken dieser Keile ist eine seitliche Ausnehmung dreieckförmigen Querschnittes eingearbeitet und an den Gehäuseteilen sind mit dieser zusammenwirkende Flächen vorgesehen. Die zwischen den aneinanderliegenden Flächen zu übertragenden Kräfte schließen mit diesen Flächen nur kleine Winkel ein. Eine derartige Anordnung verträgt aber nur recht geringe Toleranzen u zw sowohl hinsichtlich der Qualität der einzelnen Flächen als auch bezüglich deren Relativlage, so daß die Herstellung genau sein muß und teuer wird, was noch verstärkt zutrifft, wenn Scharnierverbindungeßn vorhanden sind. Bei einer anderen aus der AT-B-217 530 bekannten Klemme ist der eine Gehäuseteil als Rinne U-förmigen Querschnittes, der andere als Deckel gestaltet und die beiden Teile sind über an ihnen ausgebildete Schrägflächen verbunden. Auch für diese Klemmen gilt das oben gesagte.

Aufgabe der Erfindung ist es, eine Abspannvorrichtung der eingangs zitierten Art zu schaffen, die einerseits die Nachteile der bekannten Vorrichtungen vermeidet und die andererseits derart einfach im Aufbau ist, daß sie mit wenigen Handgriffen montiert werden kann und ihre Funktionstüchtigkeit auch bei Beanspruchung durch größte Kräfte gewährleistet ist.

Die erfindungsgemäße Abspannvorrichtung ist dadurch gekennzeichnet, daß die Klemmteile an ihrer dem Seil abgewandten Seite je eine mit Abstützungen versehene Platte ufweisen, und daß eine Spannbrille mit zwei Zapfen vorgesehen ist, um die je ein zweiarmiger Hebel drehbar gelagert ist, wobei der kürzere Hebelarm jedes zweiarmigen Hebels auf die Platte und die Abstützung wirkt und der längere Hebelarm jedeszweiarmigen Hebels in eine Ausnehmung einer Zugplatte eingreift. Mit dieser Erfindung ist es erstmals möglich größte Abspannkräfte nahe der Hundert-Tonnen-Grenze, die beispielsweise bei Abspannungen von Freileitungen über einen Kilometer auftreten, zu beherrschen. Außerdem ist die Handhabung dieser erfindungsgemäßen Abspannvorrichtung äußerst einfach. Dies erleichtert auch die Montage dieser Klemme bei ungünstigsten Umwelt- und Wetterverhältnissen, wie sie bei Arbeiten in einer Gletscherregion gegeben sind.

Gemäß einem weiteren Merkmal der Erfindung bilden die Zugplatten die Enden einer U-förmigen Halte-027004 rung. Diese Halterung wird in Betonfundamenten verankert, wodurch die Betriebssicherheit erhöht wird.

Eine weitere Ausgestaltung der Erfindung ist darin zu sehen, daß der zweiarmige Hebel gebildet ist aus einem auf den Zapfen der brille aufsteckbaren Rohr sowie einem aus Rundmaterial bestehenden Stab, der mit einer Erzeugenden an einer Erzeugenden des Rohres angeordnet ist, als kürzeren Hebelarm und einer diametral gegenüberliegend als längerer Hebelarm im Querschnitt Y-förmigen Platte, die mit ihren in eine Richtung weisenden Enden am Rohr angeordnet ist. Die einfache Konstruktion garantiert eine wirtschaftliche Herstellung dieses zweiarmigen Hebels. Ferner ist auch eine optimale Funktionsfähigkeit gewährleistet.

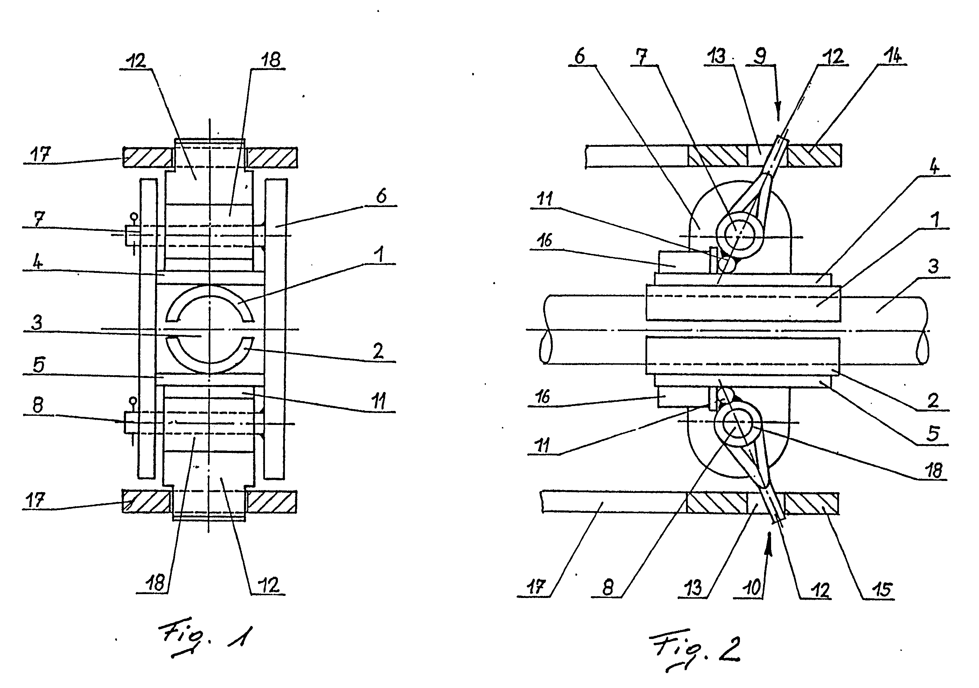

Die Erfindung wird an Hand eines in der Zeichnung dargestellten Ausführungsbeispieles näher erläutert. Fig. 1 und Fig. 2 zeigen die Abspannklemmen im Aufriß und im Seitenriß.

Gemäß Fig. 1 und 2 umschließen das Seil 3 zwei Klemmteile 1,2 die diametral gegenüberliegend angeordnet sind. An ihrer dem Seil abgewandten Seite weisen die Klemmteile 1,2 je eine Platte 4,5 auf, die mit Abstützungen 16 versehen sind. Ferner ist eine Spannbrille 6 vorgesehen, die aus zwei parallelen Abdeckungen besteht, wobei die eine Abdeckung mit zwei Zapfen 7,8 versehen ist und die zweite Abdeckung Löcher aufweist, sodaß sie auf die Zapfen 7,8 aufsteckbar ist. Um die Zapfen 7,8 ist je ein zweiarmiger Hebel 9,10 drehbar gelagert, wobei der kürzere Hebelarm II auf die Platte 4 bzw. 5 wirkt und der längere Hebelarm 12 in eine Ausnehmung 13 einer Zugplatte 14 bzw. 15 eingreift. Die Zugplatten 14, 15 können die Enden einer U-förmigen Halterung 17 bilden.

Der zweiarmige Hebel 9 bzw. 10 ist aus einem Rohr 18, das auf die Zapfen 7,8 aufgesteckt wird, gebildet, wobei an dieses Rohr 18 als kürzerer Hebelarm 11 ein Stab und als längerer Hebelarm 12 eine im Querschnitt Y-förmige Platte angeordnet ist. Der aus Rundmaterial bestehende Stab ist mit einer Erzeugenden an einer Erzeugenden des Rohres 18 angeschweißt. Diametral dem kürzeren Hebelarm 11 ist die mit ihren in eine Richtung weisenden Enden Y-förmige Platte mit diesen Enden am Rohr 18 angeschweißt.

Die Wirkungsweise dieser Abspannvorrichtung ist derart, daß die Halterung 17 im Beton verankert wird und durch die Hebelwirkung der Hebel 9,10 das Seil 3 von den Klemmteilen 1,2 sicher gehalten wird.

## Patentansprüche:

1.Abspannvorrichtung für Seile (3), Leitungen od. dgl. insbesondere für selbsttragende Freileitungen, bei welcher zwei diametral gegenüberliegende, das Seil umschließende Klemmteile vorgesehen sind, dadurch gekennzeichnet, daß die Klemmteile (1,2) an ihrer dem Seil (3) abgewandten Seite je eine mit Abstützungen (16) versehene Platte (4,5) aufweisen, und daß eine Spannbrille (6) mit zwei Zapfen (7,8) vorgesehen ist um die je ein zweiarmiger Hebel (9,10) drehbar gelagert ist, wobei der kürzere Hebelarm (II) jedes zweiarmigen Hebels (9,10) auf die Platte (4,5) Abstützung (16) wirkt und der längere Hebelarm (12) jedes zweiarmigen Hebels (9,10) in eine Ausnehmung (13) einer Zugplatte (14,15) eingreift.

2. Abspannvorrichtung nach Anspruch 1, dadurch gekennzeichnet, daß die Zugplatten(14,15) die Enden einer U-förmigen Halterung (17) bilden.

3. Abspannvorrichtung nach Anspruch 1 oder 2, dadurch gekennzeichnet, daß der zweiarmige Hebel (9,10) gebildet ist aus einem auf den Zapfen (7,8) der brille (6) aufsteckbaren Rohr (18) sowie einem aus Rundmaterial bestehenden Stab, der mit einer Erzeugenden an einer Erzeugenden des Rohres (18) angeordnet ist, als kürzeren Hebelarm (11) und diametral gegenüberliegend als längerer Hebelarm (12) im Querschnitt Y-förmigen Platte, die mit ihren in eine Richtung weisenden Enden am Rohr (18) angeordnet ist.

## Claims:

1. Dead-ending device for cables (3) lines or the like, in particular for self supporting overhead lines in which two diametrically opposite clamping parts (1,2) are provided which enclose the cable (3), characterised in that the clamping parts (1,2), on their side facing away from the cable (3), each have a plate (4,5) provided with supports (16), and that a clamping stay (6) having two pins (7,8) is provided, about each of which a double-arm lever (9,10) is rotatably mounted, with the shorter lever arm (11) of each double-arm lever (9,10) acting on the plate (4,5) and the support (16), and the longer lever arm (12) of each double-arm lever (9,10) engaging into a recess (13) of a draw plate (14,15).

2. Dead-ending device according to Claim 1, characterised in that the draw plates (14,15) form the ends of a U-shaped holder (17).

3. Dead-ending device according to Claim 1 or 2, characterised in that the double-arm lever (9,10) is formed from a tube (18) which can be placed onto the pins (7,8) of the clamping stay (6) and also from a bar made of round material, which, with a generatrix, is arranged as a shorter lever arm (11) on a generatrix of the tube (1g), and from a diametrically opposite plate which is Y-shaped in cross section and, with its ends pointing in one direction, is arranged as a longer lever arm (12) on the tube (18).

## Revendications

1.- Dispositif d'ancrage pour câbles (3), lignes électriques ou équivalents, en particulier pour lignes électriques aériennes auto-porteuses, dans lequel sont prévues deux mâchoires (1, 2) diametralement opposées, qui entourent le câble (3), caractérisé en ce que chacune des mâchoires (1, 2) presente, sur son côté le plus éloigné du câble (3), une plaque (4, 5) munie d'appuis (16), et en ce qu'il est prévu une bride de serrage (6) munie de deux axes (7, 8) sur chacun desquels est monté rotatif un levier à deux bras (9, 10), le petit bras (11) de chaque levier à deux bras (9, 10) agissant sur la plaque (4, 5) et sur l'appui (16) tandis que le grand bras de levier (12) de chaque levier à deux bras (9, 10) est engagé dans une ouverture (13) d'une plaque de traction (14, 15).

2.- Dispositif d'ancrage selon la revendication 1, caractérisé en ce que les plaques de traction (14, 15) forment les extrémités d'une monture (17) en forme de U.

3.- Dispositif d'ancrage selon l'une des revendications 1 ou 2, caractérisé en ce que le levier à deux bras (9, 10) est composé d'un tube (18) qui peut être emmanché sur l'un des axes (7, 8) de la bride de serrage (6),ainsi que d'une barre de forme arrondie, qui est disposée avec une génératrice en coïncidence avec une génératrice du tube (18), pour constituer le petit bras de levier (11), et d'une plaque présentant en section la forme d'un Y, diamètralement opposée à la barre, et constituant le

grand bras de levier (12), cette plaque étant disposée adjacente au tube (18) par ses extrémités dirigées dans un sens.

Fig. 2

Fig. 1